# EUROPÄISCHE PATENTSCHRIFT

(11) **EP 4 588 868 B1**
(45) Veröffentlichungstag und Bekanntmachung des Hinweises auf die Patenterteilung: **18.02.2026**
(21) Anmeldenummer: 25153061.4
(22) Anmeldetag: 21.01.2025
(51) Int. Cl.: B65G 57/00

(54) **VERFAHREN UND VORRICHTUNG ZUM STAPELN UND FÖRDERN VON MIT HÜHNEREIERN BESETZTEN EIERVERPACKUNGEN**
METHOD AND DEVICE FOR STACKING AND CONVEYING EGG PACKAGES OCCUPIED BY POULTRY EGGS
PROCÉDÉ ET DISPOSITIF POUR EMPILER ET TRANSPORTER DES PAQUETS D'OEUFS OCCUPÉS PAR DES OEUFS DE POULE

(30) Priorität: 22.01.2024 DE 102024101763
(43) Veröffentlichungstag der Anmeldung: 23.07.2025
(73) Patentinhaber: Völker GmbH, 49377 Vechta (DE)
(72) Erfinder: Völker, Peter, 49377 Vechta (DE)
(74) Vertreter: Jabbusch, Matthias

(56) Entgegenhaltungen:
- EP-A1- 0 937 668
- EP-A2- 0 255 199
- GB-A- 2 051 722

## Beschreibung

Die Erfindung betrifft ein Verfahren zum Stapeln und Fördern von mit Hühnereiern besetzten Eierverpackungen, die auf wenigstens einer Förderstrecke bewegt werden. Außerdem betrifft die Erfindung eine Vorrichtung zum Stapeln und Fördern von mit Hühnereiern besetzten Eierverpackungen mit wenigstens einer zwischen zwei Förderbändern angeordneten Stapelmaschine und einer die Stapelmaschine mit den Förderbändern verbindenden Steuerung.

Bekannte Verfahren und Vorrichtungen dienen dem automatisierten Stapeln und Abtransportieren von in Verpackungsmaschinen mit Hühnereiern besetzten Eierverpackungen. Weil das Stapeln der Eierverpackungen jedoch mehr Zeit in Anspruch nimmt, als das bloße Abtransportieren der Eierverpackungen, sind Stapelmaschinen mit parallel zueinander verlaufenden Förderlinien bekannt. Die Anschaffung solcher Großanlagen ist für kleinere Betriebe oftmals jedoch nicht lohnenswert, so dass eine vollständige Automatisierung der Arbeitsprozesse problematisch ist.

Ein gattungsgemäßes Verfahren bzw. Vorrichtung ist aus der EP0255199A2 bekannt.

Der Erfindung liegt deshalb die Aufgabe zugrunde, ein Verfahren und eine Vorrichtung der eingangs genannten Gattung aufzuzeigen, mit welchen es insbesondere kleineren Unternehmen möglich ist, das Stapeln und Fördern von mit Hühnereiern besetzten Eierverpackungen zu automatisieren.

Diese Aufgabe ist erfindungsgemäß mit einem Verfahren mit den Merkmalen des Patentanspruches 1 sowie mit einer Vorrichtung mit den Merkmalen des Patentanspruches 5 gelöst. Vorteilhafte Weiterbildungen der Erfindung sind in den jeweils auf diese Patentansprüche rückbezogenen Unteransprüchen angegeben.

Das erfindungsgemäße Verfahren zeichnet sich dadurch aus, dass bei den Eierverpackungen sensorisch zwischen Eierschachteln und Höckerlagen unterschieden wird und daraus Steuerbefehle generiert werden, dass mit den Steuerbefehlen auf der Förderstrecke gelegene Förderorgane derart angesteuert werden, dass die Eierschachteln auf der Förderstrecke stetig weiterbefördert werden und dass die Höckerlagen zu Warenstapeln gestapelt und die Warenstapel auf der Förderstrecke unstetig weiterbefördert werden. Insbesondere kleineren Unternehmen bietet das erfindungsgemäße Verfahren die Möglichkeit, zu den Standardverpackungen gehörende Höckerlagen und Eierschachteln auf ein und derselben Förderstrecke zu bewegen. Auf diese Weise kommt es zu einer höheren Auslastung der Förderstrecke, so dass Automatisierungsschritten eine höhere Effizienz zuteilwird.

Nach einer ersten Weiterbildung des erfindungsgemäßen Verfahrens ist vorgesehen, dass beim Stapeln der Höckerlagen jede Höckerlage angehoben wird, jede zweite angehobene Höckerlage in einem Winkel von 90° um eine Vertikalachse herum gedreht wird, und die Höckerlagen zur Ausbildung des Warenstapels aufeinander abgesetzt werden. Diese Verfahrensschritte beschreiben die klassische Stapelweise von mit Hühnereiern besetzten Höckerlagen, bei der die Eier jeweils unmittelbar benachbarter Höckerlagen vorteilhaft platzsparend auf Lücke gesetzt werden. Für diese Stapelweise geeignete Höckerlagen weisen bevorzugt in einem 5x6 Raster angeordnete Mulden zur Aufnahme von 30 Eiern auf. Grundsätzlich liegt es jedoch im Rahmen der Erfindung, wenn mit dem Verfahren Höckerlagen in unterschiedlichen Größen gestapelt und weiterbefördert werden können. Auch eine Weiterbeförderung unterschiedlich groß ausgebildeter Eierschachteln auf derselben Förderstrecke ist Bestandteil der Erfindung.

Nach einer nächsten Weiterbildung der Erfindung erfahren die Eierschachteln bei ihrer unstetigen Weiterbeförderung auf der Förderstrecke einen temporären Wechsel von einer motorischen Antriebskraft zu einer gravitationsbedingten Antriebskraft. Dabei ermöglicht der Antriebskraftwechsel die für die unstetige Weiterbeförderung der Warenstapel erforderliche getaktete Arbeitsweise. Die gravitationsbedingte Antriebskraft ermöglicht einen stetigen und selbsttätigen Übergang der Eierschachteln von einem Förderorgan auf ein anderes. Es liegt jedoch im Rahmen der Erfindung, den Antriebskraftwechsel zwischen zwei motorisch angetriebenen Systemen zu generieren.

Um die Ansteuerung so einfach und kostengünstig wie möglich auszubilden, wird vorgeschlagen, dass die Warenstapel auf der Förderstrecke so lange angehalten werden, bis der Warenstapel seine maximale Stapelhöhe erreicht hat oder bis bei der sensorischen Unterscheidung der Eierverpackungen eine Eierschachtel erkannt wird. Letzteres hat zur Folge, dass Warenstapel auf der Förderstrecke auch dann weiterbefördert werden können, wenn sie ihre maximale Stapelhöhe noch nicht erreicht haben. Der Weitertransport unvollständiger Warenstapel kann beispielsweise durch Zählwerke an den Verpackungsmaschinen verhindert werden. Wechseln sich auf der Förderstrecke Eierschachteln und Hökerlagen allerdings zu häufig ab, kann es vermehrt zu unvollständig aufgestapelten Warenstapeln kommen, die nachträglich manuell zu komplettieren sind. Alternativ wird vorgeschlagen, dass die Warenstapel auf der Förderstrecke solange angehalten werden, bis der Warenstapel seine Maximalhöhe erreicht hat und dass zwischenzeitlich bei der sensorischen Unterscheidung der Eierverpackungen erkannte Eierschachteln den unvollständigen Warenstapel passieren können.

Die erfindungsgemäße Vorrichtung zeichnet sich dadurch aus, dass die Steuerung eine an wenigstens einem der Förderbänder angeordnete Sensorik zur Unterscheidung der Eierverpackungen zwischen Eierschachteln und Höckerlagen aufweist, dass mit der Steuerung zwischen den Förderbändern und der Stapelmaschine wenigstens zwei Betriebszustände ausgebildet sind, einem ersten Betriebszustand, in welchem die Förderbänder zu einem Stetigförderer für die Eierschachteln miteinander verbunden sind, und einem zweiten Betriebszustand, in welchem die Förderbänder über die Stapelmaschine zu einem Unstetigförderer für die Höckerlagen miteinander verschaltet sind.

Insbesondere kleineren Betrieben bietet die erfindungsgemäße Vorrichtung die Möglichkeit, zu dem Standardverpackungen gehörende Höckerlagen und Eierschachteln auf ein und denselben Förderbändern zu bewegen. Auf diese Weise kommt es zu einer höheren Auslastung der Förderbänder, so dass Automatisierungsschritten eine höhere Effizienz zuteilwird. Die Sensorik besteht in der Regel vorzugsweise aus optischen Sensoren, welche die deutlichen Größenunterschiede zwischen Eierschachteln und Höckerlagen detektieren können. Um die beiden Betriebszustände zu erreichen, werden mit der Steuerung Steuerbefehle generiert, mit welchen die Förderbänder entweder ohne Einbindung der Stapelmaschine zu dem Stetigförderer miteinander vereint werden oder die Förderbänder unter Einbindung der Stapelmaschine zu einem Unstetigförderer für die Höckerlagen miteinander vereint werden.

Nach einer ersten Weiterbildung der erfindungsgemäßen Vorrichtung weist die Stapelmaschine einen Greifer sowie ein den Greifer drehbeweglich aufnehmendes Hubwerk auf, wobei das Hubwerk an einem Maschinenschlitten linearbeweglich geführt und die Schlittenführung parallel zur Förderrichtung der Förderbänder ausgerichtet ist. Diese Vorrichtungsmerkmale beschreiben eine klassisch ausgebildete Stapelvorrichtung zum Stapeln von mit Hühnereiern besetzten Höckerlagen, bei der die Eier jeweils unmittelbar benachbarter Höckerlagen vorteilhaft platzsparend auf Lücke gesetzt werden. Für derartige Stapelvorrichtungen geeignete Höckerlagen weisen bevorzugt in einem 5x6 Raster angeordnete Mulden zur Aufnahme von 30 Eiern auf. Grundsätzlich liegt es jedoch im Rahmen der Erfindung, wenn mit dem Greifer Höckerlagen in unterschiedlichen Größen gestapelt und weiterbefördert werden können. Auch eine Weiterbeförderung unterschiedlich groß ausgebildeter Eierschachteln auf denselben Förderbändern ist fester Bestandteil dieser Erfindung.

Nach einer anderen Weiterbildung der Erfindung sind die Förderbänder wenigstens über eine Rollenrutsche zu dem Stetigförderer miteinander verbunden. Die Rollenrutsche ermöglicht einen selbsttätigen Übergang der Eierschachteln von einem zum anderen Förderband sowie eine mechanische Entkopplung ihrer Antriebe, was für das Betreiben des Unstetigförderers unverzichtbar ist. Im Vergleich zu Kupplungsanordnungen stellt die Rollenrutsche für das Stapeln und unstete Weiterbefördern der zu Höckerlagen aufgestapelten Warenstapel eine vorteilhaft kostengünstige Ausführungsform dar. Es liegt jedoch im Rahmen der Erfindung, die Förderbänder mittels elektrischer, hydraulischer oder pneumatischer Systeme miteinander zu verbinden.

Für den Antrieb der Förderbänder sind vorzugsweise schrittgesteuerte Motoren geeignet, mit denen auf den Förderbändern verfahrene Eierverpackungen an vorbestimmten Positionen angehalten werden können.

Ein Ausführungsbeispiel der Erfindung, aus dem sich weitere erfinderische Merkmale ergeben, ist in der Zeichnung dargestellt. Es zeigen:
- Fig. 1:: eine perspektivische Ansicht einer erfindungsgemäßen Vorrichtung in einem ersten Betriebszustand; und
- Fig. 2:: eine perspektivische Ansicht der Vorrichtung gemäß Fig. 1, jedoch in einem zweiten Betriebszustand.

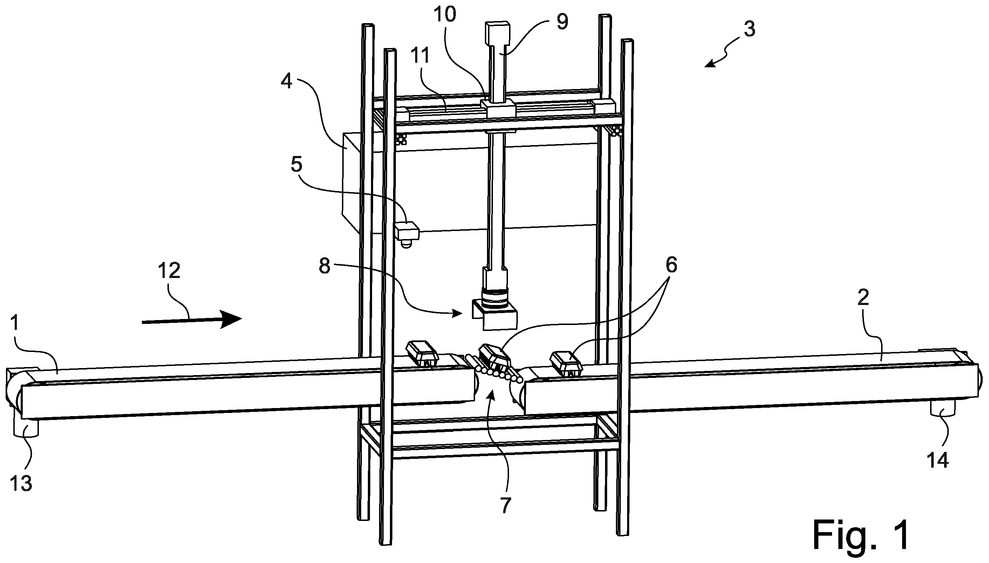

Die Fig. 1 zeigt die erfindungsgemäße Vorrichtung beim Fördern von mit Hühnereiern besetzten Eierverpackungen mit einer zwischen zwei Förderbändern 1, 2 angeordneten Stapelmaschine 3 und einer die Stapelmaschine 3 mit den Förderbändern 1, 2 verbindenden elektronischen Steuerung 4. Die Steuerung 4 weist eine am Förderband 1 angeordnete Sensorik 5 auf. Die Fig. zeigt die erfindungsgemäße Vorrichtung in einem ersten Betriebszustand, in welchem die Sensorik 5 die Eierverpackungen als Eierschachteln 6 erkannt hat und die Eierschachteln 6 auf den Förderbändern 1, 2 stetig weiterbefördert werden. Dabei sind die Förderbänder 1, 2 über eine Rollenrutsche 7 zu einem Stetigförderer miteinander verschaltet. Die Stapelmaschine weist einen Greifer 8 sowie ein den Greifer 8 drehbeweglich aufnehmendes Hubwerk 9 auf, wobei das Hubwerk 9 an einem Maschinenschlitten 10 linearbeweglich geführt ist und die Schlittenführung 11 parallel zur Förderrichtung gemäß Pfeil 12 der Förderbänder 1, 2 ausgerichtet ist. Die Förderbänder 1, 2 sind jeweils von einem schrittgesteuerten Motor 13, 14 angetrieben.

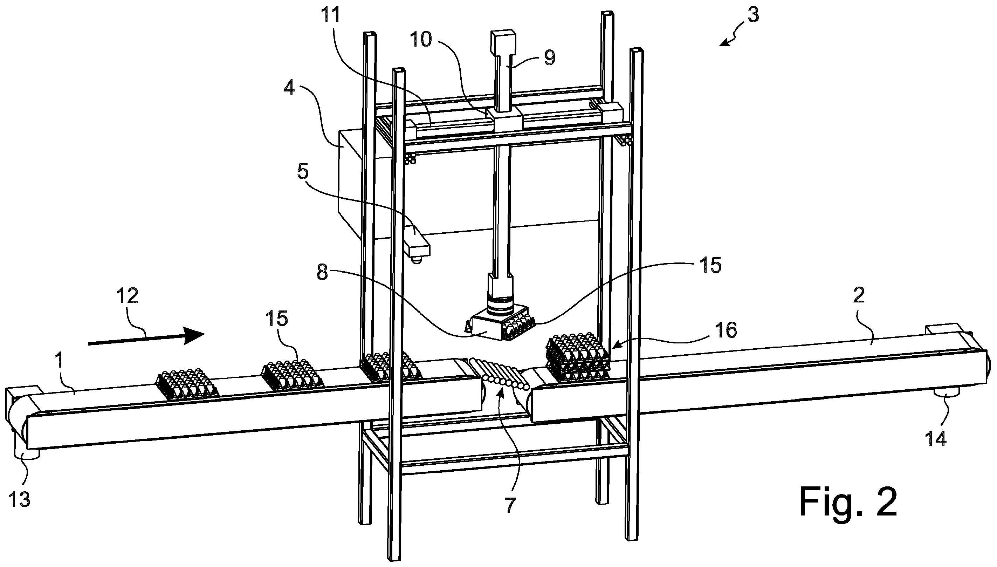

Die Fig. 2 zeigt die Vorrichtung gemäß Fig. 1 beim Stapeln und Fördern von mit Hühnereiern besetzten Eierverpackungen, jedoch in einem zweiten Betriebszustand, in welchem die Sensorik 5 die Eierverpackungen als Höckerlagen 15 erkannt hat, die Höckerlagen 15 zu Warenstapeln 16 gestapelt und die Warenstapel 16 auf dem Förderband 2 unstetig weiterbefördert werden. Dabei sind die Förderbänder 1, 2 über die Stapelmaschine 3 zu einem Unstetigförderer miteinander verschaltet. Außerdem zeigt die Fig. 2 eine in dem Greifer 8 aufgenommene Höckerlage 15 während einer vom Greifer 8 um eine Vertikalachse herum ausgeführten Drehbewegung. Gleiche Bauteile sind mit gleichen Bezugszahlen versehen.

## Patentansprüche

1. Verfahren zum Stapeln und Fördern von mit Hühnereiern besetzten Eierverpackungen, die auf wenigstens einer Förderstrecke bewegt werden, bei welchem bei den Eierverpackungen sensorisch zwischen Eierschachteln (6) und Höckerlagen (15) unterschieden wird und daraus Steuerbefehle generiert werden, **dadurch gekennzeichnet,**
**dass** mit den Steuerbefehlen auf der Förderstrecke gelegene Förderorgane derart angesteuert werden,
**dass** die Eierschachteln (6) auf der Förderstrecke stetig weiterbefördert werden, und
**dass** die Höckerlagen (15) zu Warenstapeln (16) gestapelt und die Warenstapel (16) auf der Förderstrecke unstetig weiterbefördert werden.

2. Verfahren nach Anspruch 1, **dadurch gekennzeichnet, dass** beim Stapeln der Höckerlagen (15) jede Höckerlage (15) angehoben wird, jede zweite angehobene Höckerlage (15) in einem Winkel von 90° um eine Vertikalachse herum gedreht wird, und die Höckerlagen (15) zur Ausbildung des Warenstapels (16) aufeinander abgesetzt werden.

3. Verfahren nach Anspruch 1 oder 2, **dadurch gekennzeichnet, dass** die Eierschachteln (6) bei ihrer Weiterbeförderung auf der Förderstrecke einen temporären Wechsel von einer motorischen Antriebskraft zu einer gravitationsbedingten Antriebskraft erfahren.

4. Verfahren nach einem der Ansprüche 1 bis 3, **dadurch gekennzeichnet, dass** die Warenstapel (16) auf der Förderstrecke so lange angehalten werden, bis der Warenstapel (16) seine maximale Stapelhöhe erreicht hat oder bis bei der sensorischen Unterscheidung der Eierverpackungen eine Eierschachtel (6) erkannt wird.

5. Vorrichtung zum Stapeln und Fördern von mit Hühnereiern besetzten Eierverpackungen mit wenigstens einer zwischen zwei Förderbändern (1, 2) angeordneten Stapelmaschine (3) und einer die Stapelmaschine (3) mit den Förderbändern (1, 2) verbindenden Steuerung (4),
dass die Steuerung (4) eine an wenigstens einem der Förderbänder (1, 2) angeordnete Sensorik (5) zur Unterscheidung der Eierverpackungen zwischen Eierschachteln (6) und Höckerlagen (15) aufweist, **dadurch gekennzeichnet,**
**dass** mit der Steuerung (4) zwischen den Förderbändern (1, 2) und der Stapelmaschine (3) wenigstens zwei Betriebszustände ausgebildet sind,
einem ersten Betriebszustand, in welchem die Förderbänder (1, 2) zu einem Stetigförderer für die Eierschachteln (6) miteinander verbunden sind, und
einem zweiten Betriebszustand, in welchem die Förderbänder (1, 2) über die Stapelmaschine (3) zu einem Unstetigförderer für die Höckerlagen (15) miteinander verschaltet sind.

6. Vorrichtung nach Anspruch 5, **dadurch gekennzeichnet, dass** die Stapelmaschine (3) einen Greifer (8) sowie ein den Greifer (8) drehbeweglich aufnehmendes Hubwerk (9) aufweist, wobei das Hubwerk (9) an einem Maschinenschlitten (10) linearbeweglich geführt und die Schlittenführung (11) parallel zur Förderrichtung (12) der Förderbänder (1, 2) ausgerichtet ist.

7. Vorrichtung nach Anspruch 5 oder 6, **dadurch gekennzeichnet, dass** die Förderbänder (1, 2) wenigstens über eine Rollenrutsche (7) zu dem Stetigförderer miteinander verbunden sind.

8. Vorrichtung nach einem der Ansprüche 5 bis 7, **dadurch gekennzeichnet, dass** die Förderbänder (1, 2) jeweils von einem schrittgesteuerten Motor (13, 14) angetrieben sind.

## Claims

1. A method for stacking and conveying egg packages that are occupied by poultry eggs and moved on at least one conveyor line, wherein the egg packages are subjected to a sensory differentiation between egg cartons (6) and hump layers (15) and control commands are generated based on this differentiation, **characterized in**
**that** the control commands are used for controlling conveyor elements located on the conveyor line in such a way
**that** the egg cartons (6) are continuously conveyed onward on the conveyor line and
the hump layers (15) are stacked into stacks of goods (16) and the stacks of goods (16) are discontinuously conveyed onward on the conveyor line.

2. The method according to claim 1, **characterized in that**, during stacking of the hump layers (15), each hump layer (15) is lifted, each second lifted hump layer (15) is rotated about a vertical axis by an angle of 90° and the hump layers (15) are placed on top of one another in order to form the stacks of goods (16).

3. The method according to claim 1 or 2, **characterized in that** the egg cartons (6) undergo a temporary change from a motorized driving force to a gravity-based driving force while they are conveyed onward on the conveyor line.

4. The method according to one of claims 1 to 3, **characterized in that** the stacks of goods (16) are stopped on the conveyor line until the stack of goods (16) has reached its maximum stack height or until an egg carton (6) is detected during the sensory differentiation of the egg packages.

5. A device for stacking and conveying egg packages occupied by poultry eggs, comprising at least one stacking machine (3) that is arranged between two conveyor belts (1, 2) and a control (4) that connects the stacking machine (3) to the conveyor belts (1, 2), wherein the control (4) has a sensor system (5) that is arranged on at least one of the conveyor belts (1, 2) and serves for subjecting the egg packages to a differentiation between egg cartons (6) and hump layers (15), **characterized in**
**that** at least two operating states are realized with the control (4) between the conveyor belts (1, 2) and the stacking machine (3), namely a first operating state, in which the conveyor belts (1, 2) are connected to one another so as to form a continuous conveyor for the egg cartons (6), and a second operating state, in which the conveyor belts (1, 2) are interconnected by means of the stacking machine (3) so as to form a discontinuous conveyor for the hump layers (15).

6. The device according to claim 5, **characterized in that** the stacking machine (3) comprises a gripper (8) and a lifting unit (9) that rotatably receives the gripper (8), wherein the lifting unit (9) is guided on a machine carriage (10) in a linearly movable manner and the carriage guide (11) is aligned parallel to the conveying direction (12) of the conveyor belts (1, 2).

7. The device according to claim 5 or 6, **characterized in that** the conveyor belts (1, 2) are connected to one another by means of at least one roller slide (7) so as to form the continuous conveyor.

8. The device according to one of claims 5 to 7, **characterized in that** the conveyor belts (1, 2) are respectively driven by a step-controlled motor (13, 14) .

## Revendications

1. Procédé, consistant à empiler et à convoyer des emballages d'œufs pourvus d'œufs de poules, que l'on déplace sur au moins un trajet de convoyage, lors duquel pour les emballages d'œufs, l'on procède à une distinction sensorielle entre les boîtes à œufs (6) et les couches alvéolées (15) et l'on génère à partir de celle-ci des instructions de commande, **caractérisé**
**en ce que** par les instructions de commande, l'on actionne des organes de convoyage posés sur le trajet de convoyage de telle sorte
que les boîtes à œufs (6) soient convoyées ultérieurement de manière continue sur le trajet de convoyage et
que les couches alvéolées (15) soient empilées en piles de produits (16) et les piles de produits (16) soient convoyées ultérieurement de manière discontinue sur le trajet de convoyage.

2. Procédé selon la revendication 1, **caractérisé en ce que** lors de l'empilage des couches alvéolées (15), l'on relève chaque couche alvéolée (15), l'on fait tourner de la valeur d'un angle 90 ° autour d'un axe vertical une couche alvéolée (15) relevée sur deux et l'on dépose les unes sur les autres les couches alvéolées (15) pour constituer la pile de produits (16).

3. Procédé selon la revendication 1 ou 2, **caractérisé en ce que** lors de leur convoyage ultérieur sur le trajet de convoyage, les boîtes à œufs (6) subissent un changement temporaire entre une force d'entraînement motorisée et une force d'entraînement par gravitation.

4. Procédé selon l'une quelconque des revendications 1 à 3, **caractérisé en ce que** l'on arrête les piles de produits (16) sur le trajet de convoyage jusqu'à ce que la pile de produits (16) ait atteint sa hauteur maximale d'empilage ou jusqu'à ce qu'une boîte à œufs (6) soit identifiée lors de la distinction sensorielle entre les emballages d'œufs.

5. Dispositif, destiné à empiler et à convoyer des emballages d'oeufs pourvus d'oeufs de poules, doté d'au moins une empileuse (3) placée entre deux bandes de convoyage (1, 2) et d'un système de commande (4) reliant l'empileuse (3) avec les bandes de convoyage (1, 2),
le système de commande (4) comportant un système de capteurs (5) placé sur au moins l'une des bandes de convoyage (1, 2), pour faire la distinction des emballages d'œufs par boîtes à œufs (6) et couches alvéolées (15), **caractérisé**
**en ce qu'**à l'aide du système de commande (4) sont créés entre les bandes de convoyage (1, 2) et l'empileuse (3) au moins deux états opérationnels,
un premier état opérationnel, dans lequel les bandes de convoyage (1, 2) sont reliées entre elles en un convoyeur continu pour les boîtes à œufs (6) et un deuxième état opérationnel, dans lequel les bandes de convoyage (1, 2) sont interconnectées par l'intermédiaire de l'empileuse (3) en un convoyeur discontinu pour les couches alvéolées (15).

6. Dispositif selon la revendication 5, **caractérisé en ce que** l'empileuse (3) comporte un grappin (8), ainsi qu'un mécanisme de levage (9) recevant le grappin (8) de manière mobile en rotation, le mécanisme de levage (9) étant guidée en mobilité linéaire sur un chariot de machine (10) et le guidage du chariot (11) étant orienté à la parallèle de la direction de convoyage (12) des bandes de convoyage (1, 2).

7. Dispositif selon la revendication 5 ou 6, **caractérisé en ce que** pour former le convoyeur continu, les bandes de convoyage (1, 2) sont reliées les unes avec les autres par l'intermédiaire d'une glissière à rouleaux (7) .

8. Dispositif selon l'une quelconque des revendications 5 à 7, **caractérisé en ce que** les bandes de convoyage (1, 2) sont entraînées chacune par un moteur (13, 14) à commande pas à pas.
